(19) Europäisches Patentamt
European Patent Office
Office européen des brevets

(11) Publication number: 0 229 730
A2

# (12) EUROPEAN PATENT APPLICATION

(21) Application number: 87300375.0

(22) Date of filing: 16.01.87

(51) Int.Cl.³: A 23 L 1/236

(30) Priority: 16.01.86 US 819434
30.01.86 US 823908

(43) Date of publication of application:
22.07.87 Bulletin 87/30

(84) Designated Contracting States:
AT BE CH DE ES FR GB IT LI NL SE

(71) Applicant: THE DOW CHEMICAL COMPANY
2030 Dow Center Abbott Road P.O. Box 1967
Midland, MI 48640(US)

(72) Inventor: Conklin, Jerry R.
2018 Brookfield Drive
Midland Michigan 48640(US)

(72) Inventor: Gressgott, Harvey L.
804 West Country Drive
Bartlett Illinois 60103(US)

(72) Inventor: Wolford, Troy D.
2901 Ronan Apartment 3
Midland Michigan 48640(US)

(74) Representative: Raynor, John et al,
W.H. Beck, Greener & Co 7 Stone Buildings Lincoln's Inn
London WC2A 3SZ(GB)

## (54) Thermally stable particulate artificial sweeteners.

(57) Particulate sweetening compositions having a water-swellable hydrocolloid sufficient to form a matrix-like structure, an oligopeptide sweetener, and a food acid are described. Aspartame is the preferred oligopeptide sweetener and is substantially thermally stable in the particulate matrix.

EP 0 229 730 A2

# THERMALLY STABLE PARTICULATE ARTIFICIAL SWEETENERS

This invention concerns thermally stable artificial sweetener compositions, the use of these compositions as a food additive, and a process for their preparation.

Artificial sweeteners are used as low calorie sweeteners in a variety of foods, especially in soft drinks, instant drinks and the like. A preferred sweetener is aspartame (APM) because it most closely corresponds to the sweetness sensation of sugar. Aspartame is a dipeptide sweetener, and exhibits about 180 times the sweetening ability of sugar on an equal weight basis.

Unfortunately, some oligopeptide sweeteners, such as aspartame, degrade when exposed to high temperatures in aqueous environments. Such conditions are typical in the batters of cakes, cookies, breads and such; and in sauces for pies and glazes. Such degradation causes the sweetener to lose its sweetening ability. Therefore such sweeteners cannot be employed in heated food processing, such as conventional and microwave baking.

European Patent Application 137,326 discloses that dipeptide sweeteners can be stabilized against heat for use in baking processes by coating the sweetener or a strong acid salt thereof with a lipid composition. However, it is expected such a method must be individually adapted for each food use. For example, a different lipid coat must be used for cakes than the lipid coat that used for pies.

U.S. Patent 4,439,460 discloses that sulfate or sulfonate salts of aspartame are thermally stable and are useful in baked goods. The phosphate salt of aspartame is also disclosed as being thermally unstable.

A method for sweetening ready-to-eat cereals is disclosed in U.S. Patent 4,540,587. The method involves coating the cereal with a coating composition comprised of an aqueous suspension of aspartame and a suspending amount of a cold water-soluble gum. The suspension should be maintained below 100°F (38°C) to avoid degrading the aspartame.

It would be desirable, therefore, to have an artificial sweetener composition which would be thermally stable and useful in providing low calorie heated food compositions, such as cakes and cookies.

This invention provides a particulate sweetening composition comprising:

(a) at least one oligopeptide sweetener;
(b) at least one food acid; and
(c) at least one hydrocolloid.

In another aspect of the present invention, the particulate sweetening composition is encapsulated with a hydrophobic coating.

A further aspect of the invention provides the use of the particulate sweetening compositions as a food additive.

Processes for preparing the sweetening composition and coated sweetening composition are also another aspect of the present invention.

In yet another aspect, this invention is a process for providing substantially thermally stable oligopeptide sweeteners suitable for sweetening heat-preparable food compositions. The process comprises providing a particulate matrix of a water-swellable hydrocolloid composition which contains therein a oligopeptide sweetening compound.

Surprisingly, the particulate sweetening composition substantially resists degradation in heated foods during heating at oven temperatures of 400°F (204°C). Therefore, heat-prepared foods, such as cakes, can employ the particulate sweetening compositions as substitutes for sugar.

The invention provides an artificial sweetener composition which is thermally stable and useful in providing low-calorie baked goods, and is especially useful in providing substantially sugarless, low-calorie cakes.

By "substantially sugarless" is meant that no sugar is employed to sweeten the baked food composition. Examples of such sugars are sucrose,

fructose and similar natural sugars. Some of the components of the food composition can inherently contain an amount of a sugar and such components can be employed in this invention. For example, maltodextrin contains some sugar, but can be employed as a bulk filler in compositions of this invention. Further, an amount of a sugar may be required for other purposes than sweetening. For example, in preparing breads an amount of sugar is sometimes added to serve as a neutrient for the yeast.

The particulate artificial sweetener composition of the present invention contains:

(a) at least one oligopeptide sweetener;
(b) at least one food acid;
(c) at least one hydrocolloid.

The three components are preferably present in the sweetener composition as follows:

sweetener, from 5 to 40 percent by weight, more preferably 10 to 30 percent by weight;

food acid, from 0.5 to 30 percent by weight, more preferably 5 to 20 percent by weight; and

hydrocolloid, from 40 to 94.5 percent by weight, more preferably 50 to 90 percent by weight.

The sweetener composition can optionally be coated with a hydrophobic coating. The percent by weight of the coating, based on the total weight of the sweetener composition, is from 5 to 100, preferably from 10 to 80.

In the artificial sweetener composition, the oligopeptide sweetener contains more than one amino acid. Preferably, dipeptide sweeteners are employed,

especially the aspartyl-type dipeptide sweeteners which correspond to the formula:

$$H_2NC(CH_2CO_2H)HCONHC(R^2)HCO_2R^1 \qquad (I)$$

wherein $R^1$ is an alkyl group of 1 to 6 carbon atoms and $R^2$ is phenyl, phenylalkyl or cyclohexylalkyl, with the alkyl groups having from 1 to 5 carbon atoms. More preferably, $R^1$ is methyl and $R^2$ is benzyl. The most preferred sweetener is aspartame (or 1-methyl-N-L-a-aspartyl-L-phenylalanine or APM).

In the sweeteners of Formula I, the $R^1$ term is a hydrolytically sensitive ester group which decomposes under heat in the presence of moisture. To employ the sweeteners of Formula I in baked foods it is necessary to stabilize the ester group.

The oligopeptide sweetener can be employed in the zwitterionic or ionic form. Preferably, cationic acid salts of the sweetener are employed because such salts can resist thermal degradation more than the zwitterionic form. Examples of suitable acid salts are sulfate, sulfonate and hydrochloride acid salts. More preferably, weak acid salts are employed because they exhibit the best thermal stability and also act as buffers in the presence of strong alkaline agents.

Methods of making the oligopeptide sweeteners are known, e.g. U.S. Patent 3,492,131. Aspartame, for example, is commercially available from the G. D. Searle & Co. (a subsidary of Monsanto). The acid salts can be prepared by adding an amount of the oligopeptide

sweetener to an amount of water sufficient to form a slurry. An amount of the acid is then added to the sweetener/water slurry until all the sweetener is dissolved. Preferably, at this point the reaction is neutralized. The neutralized reaction mixture can have a pH between 1 and 5.2, preferably between 3 and 5. The solution can then be chilled and the sweetener salt can be precipitated out and recovered by filtration means. Typically, one molar equivalent of the sweetener is added per molar equivalent of protons on the acid. For example, for monoprotic salts, one mole of sweetener can be added to one mole of acid; for polyprotic salts, two or more moles of sweetener can be added per mole of acid.

In the artificial sweetener composition, the food acid(s) together with the possible presence of a salt form of the sweetener, provide the required pH control from 2 to 5 to maintain the integrity of the sweetener.

The preferred weak acid salts useful in this invention are salts of inorganic and organic weak acids which contain protons which are incompletely dissociated from the molecule and which can exhibit buffering action in the presence of strong bases. Such acids can form salts of the oligopeptide sweeteners and retain the salt form in hostile pH environments. Such pH environments are described in G. D. Searle's Technical Bulletin, "The NutraSweet® Breakthrough", U.S. 001-682, 1982. An example of a suitable inorganic weak acid is phosphoric acid. Suitable organic weak acids include the $C_1$-$C_{12}$ carboxylic acids, and weak acid hydrocolloids. Suitable monomeric carboxylic acids include lactic, citric, acetic, propionic,

succinic, tartaric, ethylenediaminetetraacetic acid, and other monoprotic or polyprotic carboxylic functional molecules. These weak acid acidulents can be monomeric, oligomeric or polymeric. For example, maltodextrin, alginate, xanthan, and polydextrose are all polymeric carboxy-functional acidulents. The preferred acidulents include the commonly used citric, ascorbic, lactic, tartaric, alginic, and malic acids, maltodextrin (partially hydrolyzed starch).

It is not uncommon for a component of the present sweetener composition to serve in a multipurpose capacity, such as some of the polymeric components, for example, xanthan, polydextrose, maltodextrin, and alginic acid, as both a hydrocolloid and food acid (acidulent). Likewise, some food acids (acidulents) such as citric acid and maltodextrin can function as both food acids and adhesion promoters.

The purpose of the food acid is to sustain a low pH (about 2-5) microenvironment within the granule of the sweetener composition and in a small adjacent environment. Suprisingly, a pH environment below 5, preferably 2 to 4, enables the sweetener of Formula I to survive the thermal environment of baking. Therefore, the food acid desirably should provide a buffering capacity in the presence of alkali sources, e.g. leavening agents such as baking powder and baking soda. The most preferred weak acid is citric acid.

An effective amount of the present acid salt of the oligopeptide sweetener is a sweetening amount. For example, such oligopeptide sweeteners can exhibit potencies varying from 100-180 times the sweetening capability of sucrose,depending on the particular food.

Therefore, for example, for every 100 parts of sugar removed from a food formulation, one part of the acid oligopeptide sweetener can be employed. Such an amount is based entirely on preference of sweetening intensity but typically ranges from 0.01 to 0.5 weight percent based on the food. While some foods such as a cooked casserole or baked bread may require only small amounts (e.g. 0.01-0.05 %), other foods like pies and cakes may require larger amounts (e.g. 0.1-0.5 %).

One method to stabilize the sweeteners of Formula I is to reduce its contact with water in the environment where it is used, e.g., baked food products. A hydrocolloid imparts a high viscosity to the matrix of the sweeteners of Formula I upon contact with water. Desirable water-swellable hydrocolloid compositions of this invention comprise natural and/or synthetic hydrocolloids which swell when contacted with water. The composition can be a mixture of one or more different hydrocolloids. The hydrocolloids are nontoxic materials such as gums, polysaccharides isolated from water plants, various modified cellulose polymers, proteins, clays, colloidal silicas and the like. Preferably, such hydrocolloids form a gel upon swelling. The water-swellable hydrocolloids can be substantially water-insoluble or substantially water-soluble.

Examples of suitable water-insoluble hydrocolloids are water-insoluble cellulose ethers; and water-insoluble natural gums. Examples of water-insoluble natural gum are starch and starch derivatives. Such water-insoluble cellulose ethers include ethyl hydroxypropyl methylcellulose;

ethylcellulose, hydroxypropyl ethylcellulose, and the like.

Additionally, various oligopeptides are suitable as hydrocolloids, such as gelatin, egg white, and casein. Other water-insoluble hydrocolloids of interest include clays and silicas.

Examples of suitable water-soluble hydrocolloids include water-soluble synthetic gums, such as the cellulose ethers and water-soluble natural gums. Such water-soluble synthetic gums include polyvinyl alcohols, carboxymethylcellulose, methylcellulose, hydroxypropyl methylcellulose, hydroxypropyl cellulose, hydroxyethyl methylcellulose, methylethylcellulose, and the like. Suitable water-soluble natural gums include xanthan, dextrin, maltodextrin, guar gum, acacia, gum arabic, locust bean gum, sterculia gum, agar, chondrus, algin, alginic acid, tragacanth, carrageenan, and the like.

The most preferred hydrocolloids include the class of compounds known as carbohydrate gums. Most preferred carbohydrate gums are those which form gel-like structures when added to an aqueous solution. This gel-like structure enables sustained release of the sweetener, i.e. prolonged retention in the gel even when moisture (e.g. water) is present. Such gel-forming carbohydrates are thermally gelling celluloses [e.g. methylcellulose (ME), hydroxypropyl methylcellulose (HPMC), and methylethylcellulose (MEC)] and ionically gelling compounds (e.g. xanthan, carrageenan, and alginic acid, or alginic acid salts). Preferably, a water-soluble cellulose ether is employed

because such cellulose ethers exhibit the desired thermal gelation properties.

Examples of preferred water-soluble cellulose ethers include hydroxypropyl methylcellulose having a hydroxypropoxyl substitution of from 4 to 35 weight percent and a methoxyl substitution of from 16 to 35 weight percent. More preferably, the hydroxypropyl methylcellulose has a hydroxypropoxyl substitution of from 7 to 12 weight percent, and a methoxyl substitution of from 28 to 30 weight percent. Another preferred cellulose ether is a methylcellulose with a methoxyl substitution of from 26 to 33 weight percent.

The methods of making the hydrocolloids of this invention are known. For example, to make a water-soluble cellulose ether, an amount of an alkylene oxide or alkyl halide is reacted with an amount of an alkali cellulose.

The hydrocolloid can have any particle size which can be granulated. Preferably, the hydrocolloid has a particle size distribution substantially similar to that of the oligopeptide sweetener. Preferably, the particle size is such that at least 75 weight percent can pass through a 100, more preferably through a 140, and most preferably through a 200 mesh screen.

The particulate sweetening composition may further comprise an adhesion promoter to facilitate the adhesion of the hydrocolloid in the matrix-like structure. It is advantageous that the adhesion promoter be compatible with the oligopeptide sweetener. Examples of suitable adhesion promoters are, for example, citric acid, hydroxypropyl methylcellulose,

methylcellulose, and maltodextrin. Preferably, citric acid is employed because, in addition to promoting adhesion, it can form a thermally stable salt of the oligopeptide sweetener and it can also be the food acid. The adhesion promoter can be employed in any amount which can promote adhesion of the hydrocolloid particles. The methods of making the adhesion promoters are known in the art.

The preferred hydrocolloid which is water-swellable is employed in an amount sufficient to form a matrix-like structure and can contain the oligopeptide sweetener. A matrix-like structure is a substantially solid structure having void spaces suitable for retaining an oligopeptide sweetener in the form of solid particles. Based on total weight of particulate sweetening composition, such matrix-forming amount of hydrocolloid can be from 40 to 90 weight percent, and preferably from 50 to 80 weight percent based on total weight of particulate sweetening composition.

The oligopeptide sweetener contained in the hydrocolloid composition matrix is in the form of a particulate. Such a particulate can be microscopic or macroscopic in size and can be as large as granules. The size of the particulate is not critical, as long as the sweetening composition can be adequately dispersed throughout a food to provide a sweetening sensation, and enough hydrocolloid is employed to substantially protect the oligopeptide from an otherwise degrading environment.

The particulate sweetening composition can be prepared by conventional combining methods. Examples

of such methods are wet granulation, dry granulation, extrusion/grinding granulation, and the like.

In dry granulation the mixture of ingredients is precompressed to form a large tablet. The tablet is then milled or ground to the desired particle size.

In extrusion/grinding granulation, the amount of hydrocolloid, sweetener, and food acid are dry blended to provide a homogeneous mixture. Preferably, a hydrocolloid exhibiting plasticity such as a hydroxypropyl methylcellulose is employed. The homogeneous mixture is heated to a melting temperature, and then extruded to provide strands of the mixture. The strands can be ground to a suitable particle size to provide the particulate sweetening composition.

Preferably, a wet granulation is employed to provide the particulate sweetening composition. In such a process, the hydrocolloid and oligopeptide sweetener are added and dry blended to provide a homogeneous mixture. A granulating solution comprising a solvent, food acid, and optionally an adhesion promoter is added slowly under agitation to wet the entire amount of hydrocolloid and sweetener mixture. Examples of suitable solvents include water, $C_1$-$C_3$ alcohols such as ethanol, and the like. Preferably, water is employed. An effective amount of the granulating solution is an amount sufficient to wet the mixture without formation of large rubbery agglomerates. Such an amount can vary, and typically can range up to equal weight parts of solution and dry mixture. The solution and mixture are agitated for a time sufficient to aggregate the mixture, in for example a Hobart mixer. Advantageously, an amount of

heat, for example applied through a heat lamp, is applied to facilitate dispersion of the solvent through the mixture. The wet granular aggregates can then be dried in any conventional manner, for example, in mild heat in a vacuum. The aggregates can then be milled or ground to the desired particle size.

The particulate sweetening composition has a particle size sufficient to contain the amount of sweetener and swell upon contact with water. It can also be dispersed throughout the food composition to provide an even sweetening sensation. Such a particle size can vary, and typically it is sufficient that the particle size be between 0.1 and 5 mm, preferably that the particles pass through a 3 and are retained on a 140 mesh standard screen; more preferably between 0.25 to 1.7 mm, pass through a 12 and retained on a 60 mesh screen (U.S. Standard); although any particle size which can contain the hydrocolloid and sweetener can be employed.

The particulate sweetening composition of the present invention can be porous or quite compact with few interstitial voids. For inhibiting the hydration of the ester group of the sweetener, the composition should be densified to reduce voids which promote premature wetting via capillarity. The amount the composition is densified can be controlled and optimized for the intended use. The particulates are approximately spheroidal and can be subjected to treatment by a marumerizer to effect a more substantial spheroidization.

The present sweetening composition can be coated with a hydrophobic coating that is suitable for consumption. The hydrophobic coating serves to further

delay the diffusion of water into the sweetening composition and thus slows the hydrolysis of the ester group of the sweetener. However, the hydrophobic coating should not be totally impervious to water penetration as that would inhibit the release of the sweetener for flavor. To obtain the critical balance for water penetration of the coating, the coating must be carefully selected. Examples of such coatings include any of the edible lipids and their derivatives such as vegetable fats, animal fats, various mono-, di- and triglycerides, fatty acids, hydrogenated derivatives of the above, lipoproteins, and other similar materials; and waxes of synthetic origin such as paraffin and polyethylene, and of natural origin such as beeswax.

To obtain the desired properties of the coating it is desirable to know their melting or softening ranges. The coating should melt or lose impermeability at a temperature below 100°C but above 50°C, preferably below 100°C and above 60°C.

To coat the present sweetening composition with a hydrophobic coating, conventional methods are employed. For example, one method is the use of the Wurster process of spray encapsulation.

The weight percent of coating is preferably between 10 to 80, and more preferably between 20 to 60, of the total final sweetener particle weight.

An amount of particulate sweetening composition is added to the food composition in an amount sufficient to provide an organoleptically equivalent sweetening sensation as sugar. Both coated or non-

coated sweetener compositions are used in about equal amounts based on the weight of the sweetener. Therefore, for every 100 parts of sugar removed from a food formulation, one part of the sweetener composition can be used, based on the weight of the sweetener.

The sweetener composition of the present invention can be used as a food additive, particularly for heat-preparable food compositions. Heat-preparable food compositions are food compositions which can be provided in final edible form by the application of heat. These heat-preparable food compositions contain the sweetener composition which may be coated, and the food material such as batters, frozen foods, sauces, fillings, and other nutritive ingredients. Suitable food materials include, for example, batters for cakes, cookies, breads, pastries and pie doughs; frozen foods which can be prepared by boiling, baking, frying, or microwave cooking; sauces, fruit fillings and glazes, and the like. Preferably, the food material is a batter composition, and most preferably a batter composition for cakes. After applying heat for a sufficient time, the composition is a heat-prepared food composition.

For frozen foods, the particulate sweetening composition can be included in the sauces, dessert compositions and the like. For the batters of cakes, cookies, breads, pastries and pie doughs the particulate sweetening composition can typically be included along with the flour which provides a cellular matrix, flavorings, and leavening agents.

The preferred batter compositions for cakes can comprise an amount of flour, for example, whole wheat, soft wheat, all purpose, or enriched. The batter composition can also comprise an amount of shortening which can comprise an emulsifier which can reduce the interfacial tension between the shortening and any aqueous component of the batter. Examples of suitable shortening compositions are animal or vegetable oil, coconut oil, palm kernel oil, cottonseed oil, peanut oil, olive oil, sunflower seed oil, sesame oil, corn oil, safflower oil, poppyseed oil, soybean oil, and the like. Oils synthesized from natural or synthetic fatty acids are also suitable. The batter can also contain an amount of leavening agent. Suitable leavening agents are edible carbon dioxide producing salts such as edible carbonate or bicarbonate salts, such as sodium carbonate, sodium bicarbonate, potassium carbonate, and potassium bicarbonate. The leavening agents can also be employed as compositions such as in commercially available baking soda, and double-acting baking powder. The batter can also contain eggs or egg solids, and milk or milk solids. Additionally, when preparing cakes or cookies, for example, the batter can contain an amount of a flavoring composition. Finally, if not provided by the milk, the batter can contain an amount of water.

In view of the fact that a large volume of sugar will be replaced by a very small amount of the oligopeptide sweetener of this invention, a bulk filler composition is advantageously included in the batter. Preferably, the bulk filler can be tasteless, low in calories, non-digestible, and provides little or no laxative effect. Examples of suitable fillers are

polyalkylene oxides such as polyethylene glycol, maltodextrin, polydextrose, and cellulose flour. The amount of filler composition employed is an amount sufficient to replace the volume of sugar removed. Such an amount can vary; and typically ranges from 10 to 90 weight percent based on dry ingredients and preferably from 20 to 60 weight percent; although any filling amount can be employed.

The amounts of the components employed in the batter composition are those amounts typically employed in preparing baked foods. The batter compositions can be prepared according to known methods. Typically, the shortening, flavoring, and leavening agent are first creamed together. Thereafter, the amount of the particulate sweetening composition, optionally coated, can be added to the creamed mixture. To the creamed mixture can then be added the flour and finally the eggs and milk to provide the moist batter composition. The batter composition can then be subjected to typical baking conditions to provide a finished baked food. Alternatively, the sweetening composition, the flour, the eggs, the milk, the shortening and any flavoring can be initially mixed together, and the leavening agent can then be added. Thereafter, the batter composition can be subjected to suitable baking conditions to provide a finished baked food. Alternately, the sweetener composition is added to the batter last after all other mixing of the other components.

In addition to being suitable for the preparation of a cake from scratch ingredients, the particulate sweetening composition can be added to preprepared or box cake mixes. In such an embodiment, the

particulate sweetening composition can be included in the components of the mix or added to the box cake mix after the addition of eggs and water or milk.

The preferred particulate sweetening compositions comprising aspartame as the sweetener substantially retain their sweetening ability in heated foods during and after heating. During heating, the temperature inside a cake batter, for example, can be up to 248°F (120°C). There are significant amounts of alkaline agents in the batter composition; and therefore, the batter composition can be a harsh environment for the sweetener. Oligopeptide sweeteners, such as aspartame, can substantially degrade when exposed to such hot and/or alkaline aqueous environments. Therefore, it is surprising that the particulate sweetening composition of this invention containing aspartame can retain its sweetening ability in foods during and after exposure to a hot and alkaline environment.

The following examples do not limit the scope of the invention, but are only provided to be an illustration thereof.

Example 1 - Preparation of Wet Granulated Aspartame Sweetener

To a 1-gallon Hobart mixer bowl was added 20 g aspartame (APM) (zwitterionic), 40 g MALTRIN® M100 (maltodextrin), and 40 g METHOCEL® E4MCR (hydroxypropyl methylcellulose). The granulating solution was added in a controlled fashion with 34 g of 5 percent aqueous citric acid monohydrate being required to granulate. The resulting slightly moist 1 to 3 mm granules were

dried in a vacuum oven for several hours at 40°C. The dried product was fairly friable and was crushed to obtain granules which passed through an 18 mesh screen and were retained on a 30 mesh screen. The composition of this particulate sweetening composition by formulation is:

| | Percent of Total |
|---|---|
| 20 g APM | 19.7 |
| 40 g METHOCEL® E4MCR | 39.4 |
| 40 g MALTRIN® M100 | 39.4 |
| 1.55 g Citric Acid | 1.5 |
| | 100 percent |

Example 2 - Preparation of Particulate di-APM Monohydrogen Citrate - $(APM)_2C_6H_6O_7$

Preparation of Di-aspartame Monohydrogen Citrate [$(APM)_2C_6H_6O_7$]

The di-aspartame monohydrogen citrate [$(APM)_2C_6H_6O_7$] was formed by the addition of two moles of zwitterionic APM to one mole of citric acid. To prepare this salt 21.01 g (0.1 mole) of citric acid monohydrate was added to 300 ml of hot water (≧80°C) and dissolved. To this solution was added 58.86 g (0.2 mole) of zwitterionic APM followed by agitation (stirring) for 15 minutes. To this mixture was added 200 ml warm ethanol which yielded a nearly clear solution. This mixture was chilled to induce

crystallization. The crystals were filtered off using a vacuum flask and Buchner funnel. The final dried product was a white crystalline powder which tastes quite sweet.

This sweetening composition was prepared similar to Example 1. About 26.5 g of the di-APM monohydrogen citrate was dry mixed with 40 g of MALTRIN® M100 and 40 g of METHOCEL® E4MCR. Granulation was effected with 36.4 g of 5 percent citric acid monohydrate which was added over a period of 15 minutes into a Hobart mixer. Aggregation was aided by warming the bowl with a heat gun. Spheroidal particles between 1 and 5 mm were dried in a vacuum oven for 5 hours at 50°C, 29-inch (74 cm) vacuum. The particles were ground such that they passed through an 18 mesh screen and were retained on a 30 mesh screen. The composition of this particulate sweetening composition by dry formulation is:

| | Percent of Total |
|---|---|
| 26.5 g (APM)2C6H6O7 (equivalent to 20 g APM,) | 24.5* |
| 40 g METHOCEL® E4MCR | 37.0 |
| 40 g MALTRIN® M1000 | 37.0 |
| 1.66 g citric acid | 1.5 |
| | 100.0 |

*Actual APM equivalence is 18.4 percent

Example 3

Chocolate cakes are prepared from the ingredients listed below. An amount of the particulate

0229730

sweetening composition was added to provide 0.28 weight percent oligopeptide sweetener per formulation.

| | | Grams |
|---|---|---|
| Part (A) | Sweetening composition | 2.53 |
| | Polydextrose | 157.3 |
| | Emulsified shortening | 54.8 |
| | Baking soda | 4.3 |
| Part (B) | Cake flour | 168.1 |
| | Cellulose Flour | 70.3 |
| | Nonfat milk solids | 17.9 |
| | Salt | 3.2 |
| | Baking Powder | 3.7 |
| | Baking Soda | 6.3 |
| | Levair® (Stauffer Chemical Company) | 5.4 |
| | Coca | 42.9 |
| | Xanthan | 0.7 |
| Part (C) | Whole eggs | 191.0 |
| | Water | 88.2 |
| Part (D) | Water | 88.2 |

The ingredients in Part (A) were creamed together, and then the ingredients in Part (B) were added slowly, and mixed. The ingredients of Part (C) were added, followed by addition of the water of Part (D) and mixed until a smooth batter was provided. An amount of the batter was added to two 8-inch (20 cm) diameter greased cake pans, and then placed in an oven preheated at 375°F (191°C ) for 20 minutes. The maximum internal temperature of the cake was 196°F (91°C). The

cakes were then cooled. Cake 1 employed the particulate sweetening composition prepared in Example 1. Cake 2 employed the particulate sweetening composition prepared in Example 2. Cake C-1 employed the di-aspartame salt of sulfuric acid and was not granulated with a hydrocolloid. Cake C-2 employed commercially available zwitterionic aspartame which was not granulated with a hydrocolloid.

An organoleptic test was performed on the cakes prepared by the above recipe. The cakes were ranked by six panelists in a blind experiment from sweetest to least sweet, and the results are provided in Table I.

| Cake No. | Ranking |
|---|---|
| 2 | Sweetest |
| 1 | ↑ |
| C-1* | ↑ |
| C-2* | Least Sweet |

*Not an example of this invention.

This example illustrates that chocolate cakes prepared from the particulate sweetening composition containing aspartame (Samples 1 and 2) tasted sweeter than chocolate cakes prepared from strong acid salts of, or zwitterionic aspartame (Samples C-1 and C-2).

Example 4

A 455 g sample of the sweetener composition was loaded into a Wurster spray encapsulation coating

apparatus. The coating used was a hydrogenated vegetable oil [m.p. 141-147°F (61-64°C]. The granulated particulate sweetening composition had the following formulation:

| Ingredient | Percent of Total |
|---|---|
| APM | 20.8 |
| METHOCEL® A4MP | 58.3 |
| Alginic acid | 16.7 |
| Citric Acid monohydrate | 4.2 |
| | 100 |

The sweetening composition was passed through an 18 mesh screen and retained on a 35 mesh screen.

The fluidized bed of the Wurster coating apparatus was activated with an inlet air temperature of about 90°F (32°C) and heat setting of about 90°F (32°C). A metering pump delivered the neat melted lipid to the spray nozzle at 20 g/min. The resulting coating constituted 20 weight percent of the finished weight of the particle.

A portion (71 g) of the 20 weight percent coating was retained while 467 g were reloaded into the Wurster coating apparatus to recoat the particles.

The final desired coating weight of 40 weight percent was achieved using 155 g of lipid to prepare a theoretical 622 g of lipid encapsulated sweetener.

The coating gave the the particulates a dull low-lustre appearance with a rounded and smooth overall

geometry and surface morphology. The coated particulates were free flowing and off-white in color.

0229730

## CLAIMS

1. A particulate sweetening composition comprising:

(a) at least one oligopeptide sweetener;

(b) at least one food acid; and

(c) at least one hydrocolloid.

2. The composition of Claim 1, wherein the components are present as follows:

(a) sweetener, from 5 to 40 percent by weight;

(b) food acid, from 0.5 to 30 percent by weight; and

(c) hydrocolloid, from 40 to 94.5 percent by weight,

based on the total weight of the composition.

3. The composition of Claim 2, wherein the components are present as follows:

(a) a sweetener, from 10 to 30 percent by weight;

(b) food acid, from 0.5 to 20 percent by weight; and

(c) hydrocolloid, from 50 to 90 percent by weight,

based on the total weight of the composition.

4. The composition of Claim 1, 2 or 3, wherein the oligopeptide sweetener is a dipeptide sweetener.

5. The composition of Claim 4, wherein the dipeptide sweetener has the formula

$$H_2NC(CH_2CO_2H)HCONHC(R^2)HCO_2R^1 \quad (I)$$

wherein:

$R^1$ is an alkyl group of 1 to 6 carbon atoms; and

$R^2$ is phenyl, phenylalkyl, or cyclohexyl alkyl, with the alkyl groups having from 1 to 5 carbon atoms.

6. The composition of Claim 5, wherein the dipeptide sweetener is aspartame (l-methyl-N-L-α-aspartyl-L-phenylalanine).

7. The composition of any one of the preceding claims, wherein the hydrocolloid is a water-swellable composition able to form a matrix-like structure.

8. The composition of Claim 7, wherein the hydrocolloid composition is a water-soluble cellulose ether.

9. The composition of Claim 8, wherein the water-soluble cellulose ether is hydroxypropyl methylcellulose having a hydroxypropoxyl substitution of from 4 to 35 weight percent, and a methoxyl substitution of from 16 to 35 weight percent.

10. The composition of Claim 8, wherein the water-soluble cellulose ether is methylcellulose having a methoxyl substitution of from 26 to 33 weight percent.

11. The composition of any one of the preceding claims, wherein the food acid is citric acid.

12. The composition of any one of the preceding claims wherein the pH is below 5 when the composition is in an aqueous environment.

13. The composition of Claim 2 or 3, wherein the particulate sweetening composition has a particle size such as to pass through a 12 mesh and be retained on a 60 mesh screen (U.S. Standard).

14. The use of any one of the compositions of Claims 1 to 13 as a food additive.

15. The composition of any one of Claims 1 to 13, wherein the particulates have been encapsulated with a hydrophobic coating.

16. The use of a composition as claimed in any one of the preceding claims as a sweetener for a food product.

CLAIMS (for the contracting states AT and ES)

1. A process for preparing a particulate sweetening composition which comprises commingleing:

(a) at least one oligopeptide sweetener;

(b) at least one food acid; and

(c) at least one hydrocolloid.

2. The process of Claim 1, wherein the components are present as follows:

(a) sweetener, from 5 to 40 percent by weight;

(b) food acid, from 0.5 to 30 percent by weight; and

(c) hydrocolloid, from 40 to 94.5 percent by weight,

based on the total weight of the composition.

3. The process of Claim 2, wherein the components are present as follows:

(a) a sweetener, from 10 to 30 percent by weight;

(b) food acid, from 0.5 to 20 percent by weight; and

(c) hydrocolloid, from 50 to 90 percent by weight,

based on the total weight of the composition.

4. The process of Claim 1, 2 or 3, wherein the oligopeptide sweetener is a dipeptide sweetener of the formula

$$H_2NC(CH_2CO_2H)HCONHC(R^2)HCO_2R^1 \quad (I)$$

wherein:

$R^1$ is an alkyl group of 1 to 6 carbon atoms; and

$R^2$ is phenyl, phenylalkyl, or cyclohexyl alkyl, with the alkyl groups having from 1 to 5 carbon atoms.

5. The process of Claim 5, wherein the dipeptide sweetener is aspartame (1-methyl-N-L-α-aspartyl-L-phenylalanine).

6. The process of Claim 5, wherein 1-methyl-N-L-α-aspartyl-L-phenylalanine is prepared by reacting N-benzoyloxycarbonyl-L-aspartic acid α-p-nitrophenyl, β-benzyl diester with phenylalanine ester, followed by hydrogenolysis, using palladium as the catalyst, at atmospheric pressure and room temperature.

7. The process of any one of the preceding claims, wherein the hydrocolloid is a water-swellable composition able to form a matrix-like structure.

8. The process of Claim 7, wherein the hydrocolloid composition is a water-soluble cellulose ether.

9. The process of Claim 8, wherein the water-soluble cellulose ether is prepared by reacting an alkylene oxide or alkyl halide with an alkali cellulose.

10. The process of Claim 8 or 9, wherein the water-soluble cellulose ether is hydroxypropyl methylcellulose having a hydroxypropoxyl substitution of from 4 to 35 weight percent, and a methoxyl substitution of from 16 to 35 weight percent.

11. The process of Claim 8 or 9, wherein the water-soluble cellulose ether is methylcellulose having a methoxyl substitution of from 26 to 33 weight percent.

12. The process of any one of the preceding claims, wherein the food acid is citric acid.

13. The process of any one of the preceding claims wherein the pH is below 5 when the composition is in an aqueous environment.

14. The process of Claim 2 or 3, wherein the particulate sweetening composition has a particle size sufficient to pass through a 12 and be retained on a 60 mesh screen.

15. A process for preparing a particulate sweetening composition which method comprising preparing:

(a) at least one oligopeptide sweetener;

(b) at least one food acid; and

(c) at least one hydrocolloid.

by method known per se and mixing the products.

16. The use of a particulate sweetening composition comprising:

(a) at lest one oligopeptide sweetener;

(b) at least one food acid; and

(c) at least one hydrocolloid

as a sweetening composition for a food product.